# EUROPÄISCHE PATENTSCHRIFT

(11) **EP 2 697 431 B1**
(45) Veröffentlichungstag und Bekanntmachung des Hinweises auf die Patenterteilung: **26.10.2016**
(21) Anmeldenummer: 12714923.5
(22) Anmeldetag: 13.03.2012
(51) Int. Cl.: E01B 3/46

(54) **BAHNSCHWELLE**
RAILROAD TIE
TRAVERSE DE CHEMIN DE FER

(30) Priorität: 15.04.2011 AT 5352011
(43) Veröffentlichungstag der Anmeldung: 19.02.2014
(73) Patentinhaber: Getzner Werkstoffe Holding GmbH, 6706 Bürs/Bludenz (AT)
(72) Erfinder: AUGUSTIN, Andreas, A-6714 Nüziders (AT); HÖFLE, Roger, A-6800 Feldkirch (AT); LOY, Harald, A-6780 Schruns (AT); FLATZ, Arnold, A-6771 St. Anton im Montafon (AT)
(74) Vertreter: Hofmann, Ralf U.
(86) Internationale Anmeldenummer: PCT/AT2012/000064
(87) Internationale Veröffentlichungsnummer: WO 2012/139143

(56) Entgegenhaltungen:
- EP-A2- 1 298 252
- EP-A2- 1 445 378
- WO-A1-2008/101269
- WO-A1-2009/108972
- WO-A1-2012/040798
- FR-A1- 2 935 399

## Beschreibung

Die Erfindung bezieht sich auf eine Bahnschwelle, welche einen Betonkörper mit einer an diesem angebrachten Schwellensohle aufweist, wobei zur scherkraftfesten Verbindung der Schwellensohle mit dem Betonkörper eine Verbindungslage vorgesehen ist, die einerseits mit der Schwellensohle und andererseits mit dem Betonkörper verbunden ist und hierbei teilweise in den Beton des Betonkörpers eingebettet ist, wobei die Verbindungslage von einem Gewebe gebildet wird oder ein Gewebe aufweist.

Aus elastischem Kunststoff, z.B. geschäumtem Polyurethan, bestehende Schwellenbesohlungen für Bahnschwellen werden insbesondere für den Erschütterungsschutz und die Schotterbettschonung bei Betonschwellen eingesetzt. Auf solche Schwellenbesohlungen wirken nicht nur vertikale sondern auch horizontale Kräfte, insbesondere in Querrichtung zu den Schienen, wobei solche horizontalen Kräfte beispielsweise bei Überfahrt eines Zuges in einer Kurvenfahrt oder durch Temperaturausdehnungen auftreten. Damit ein ausreichender Querverschiebewiderstand aufrechterhalten wird, müssen die auftretenden Querkräfte aufgenommen werden können. Zur Erzielung einer scherkraftfesten Verbindung des Betonkörpers der Bahnschwelle mit dem Schotterbett, unter Vermittlung der auf dem Schotterbett aufliegenden Schwellensohle, muss somit eine scherkraftfeste Verbindung zwischen dem Betonkörper und der Schwellensohle gegeben sein.

Zur Ausbildung einer scherkraftfesten Verbindung zwischen dem Betonkörper der Bahnschwelle und der Schwellensohle ist es bekannt, die Schwellensohle mit Erhebungen und Hinterschneidungsflächen auszubilden. Eine solche Ausbildung geht beispielsweise aus der FR 2 753 998 A1 hervor. Aus der DE 43 15 215 A und EP 609 729 A sind Bahnschwellen bekannt, bei denen auf der dem Betonkörper abgewandten Unterseite der Schwellensohle Geotextilschichten aufgebracht sind, um die Schwellensohle gegen das Eindringen von Schotterspitzen zu schützen.

Für feste Fahrbahnen sind von elastischen Profilen teilweise umschlossene Schwellen (sogenannte beschuhte Schwellen) bekannt. Solche beschuhte Schwellen liegen nicht auf einem Schotterbett auf und die bei festen Fahrbahnen vorliegenden Anorderungen und auftretenden Probleme unterscheiden sich von Fahrbahnen mit auf einem Schotterbett verlegten Schwellen.

Bei der Bahnschwelle, die aus der EP 1 298 252 A2 hervorgeht, ist die Schwellensohle mit dem Betonkörper der Bahnschwelle über eine Verbindungslage verbunden, die von einer Wirrfaserschicht, insbesondere Vliesschicht, gebildet wird. Fasern der Wirrfaserschicht sind hierbei einerseits in den Beton des Betonkörpers in dessen oberflächennahen unterseitigen Bereich eingebettet und andererseits in das Material der Schwellensohle eingebettet oder mit diesem verschweißt.

Durch Vorbenutzung und aus der WO 2009/108972 A1 ist weiters eine Bahnschwelle bekannt, bei der als Verbindungslage zwischen der Schwellensohle und dem Betonkörper ein dreidimensionales, thermisch verfestigtes Wirrgelege mit einer relativ großen Dicke der Fasern (="Kunststoffdrähte") des Wirrgeleges eingesetzt wird, wobei dieses Wirrgelege wiederum einerseits in den Betonkörper, andererseits in das Material der Schwellen-sohle eingebettet ist.

Durch die teilweise in den Beton eingebettete dreidimensionale Struktur dieser vorbekannten Verbindungslagen wird die dauerhafte, abreiß- und scherkraftfeste Verbindung zwischen dem Betonkörper der Bahnschwelle und der Schwellensohle verbessert. Die vorbekannten, von Wirrfaserschichten, insbesondere genadelten Vliesschichten oder Wirrgelegen, gebildeten Verbindungslagen weisen aber in verschiedener Hinsicht Nachteile auf. So ist die dreidimensionale Ausprägung von Vliesen beschränkt, was insbesondere dann zu Problemen führt, wenn an der Grenzschicht des Betonkörpers eine ausgeprägte Schicht aus Zementschlämme (=Zementschlempe) vorhanden ist, die von Zement, Wasser und Feinteilen gebildet wird. Eine solche Schicht kann nur relativ geringe Kräfte übertragen, weswegen in weiterer Folge auch die Kräfte zwischen der Verbindungslage und dem Betonkörper begrenzt sind. Ein dreidimensionales Wirrgelege hat demgegenüber den Vorteil, dass es auch in tiefer liegende Bereiche des Betonkörpers eingebettet werden kann, wodurch die Kraftübertragung prinzipiell erhöht werden kann. Nachteilig ist hierbei aber, dass solche Wirrgelege relativ heterogen sind, wobei typische Erscheinungsformen Löcher, klumpenartige Faseranhäufungen, Variationen hinsichtlich der Dicke usw. sind. Die über die Verbindungslage erreichte Kraftübertragung unterliegt somit einer gewissen Streubreite.

Eine Bahnschwelle, bei der die elastische Schwellensohle mit dem Betonkörper in der vorgenannten Art verbunden ist, geht auch aus der FR 2 935 399 A1 hervor.

Aus der WO 2008/101269 A1 geht im Weiteren eine Bahnschwelle der eingangs genannten Art hervor.

Aufgabe der Erfindung ist es eine demgegenüber verbesserte besohlte Betonschwelle bereitzustellen. Erfindungsgemäß gelingt dies durch eine Bahnschwelle mit den Merkmalen des Anspruchs 1.

Bei einer Bahnschwelle gemäß der Erfindung ist die Schwellensohle mit dem Betonkörper über eine Verbindungslage verbunden, welche von einem Gewebe gebildet wird oder ein solches aufweist.

Mit Hilfe von aus Fäden, insbesondere Garnen, hergestellten Geweben können Verbindungslagen mit homogenen dreidimensionalen Strukturen bereitgestellt werden. Die dreidimensionale Erstreckung rechtwinkelig zur Hauptebene (Mittelebene) des Gewebes kann hierbei relativ groß sein, so dass eine entsprechend tiefe Einbettung in den Betonkörper der Bahnschwelle ermöglicht wird. Vorteilhafterweise kann die rechtwinkelig zur Hauptebene des Gewebes gemessene Dicke der Verbindungslage mehr als 5mm, vorzugsweise mindestens 8mm betragen. Es können hierbei zumindest auf einer Seite der Verbindungslage abstehende Strukturen vorhanden sein, die von Fadenabschnitten gebildet werden, die zumindest über eine rechtwinkelig zur Hauptebene des Gewebes gemessene Erstreckung von 2mm, vorzugsweise mindestens 3mm, besonders bevorzugt mindestens 5mm, frei verlaufen. Es kann sich günstigerweise um schlaufen- oder bogenförmig verlaufende Fadenabschnitte handeln. Hierdurch werden Hinterschneidungsflächen gebildet, durch welche formschlüssige Verbindungen gegen ein Ausreißen aus dem Beton des Betonkörpers gebildet werden. Es handelt sich hierbei vorteilhafterweise um Abschnitte eines Garns. Grundsätzlich könnte es sich auch um Abschnitte eines monofilen Fadens handeln.

Die Begriffe Schlinge und Schlaufe bzw. schlingenförmig und schlaufenförmig werden im Rahmen dieser Anmeldung synonym verwendet. Es soll durch diese Begriffe zum Ausdruck gebracht werden, dass der Faden zumindest weitgehend ringförmig umläuft (über mehr als 300°). Der Ausdruck, dass ein Faden einen Bogen oder einen bogenförmigen Verlauf aufweist, soll zum Ausdruck bringen, dass der gebogene Verlauf des Fadens sich über einen demgegenüber geringeren Teil eines vollständigen Rings erstreckt, wobei die Biegung jedenfalls mehr als 90° beträgt. Biegungen von zumindest 180° sind hierbei bevorzugt. Bogenförmige Verläufe, die sich über einen Winkelbereich von etwa 180° (+/- 30°) erstrecken, werden im Folgenden auch als Schleifen oder schleifenförmige Verläufe bezeichnet. Dies ist im Einklang mit der in der Textiltechnik verwendeten Bezeichnung einer Schleife für den beim Stricken und beim Wirken zur Einleitung der Maschenbildung umgeformten Faden, der eine entsprechende Form aufweist.

Der Begriff Faden wird in dieser Schrift allgemein für Monofilfäden, Garne und Zwirne verwendet. Garne sind praktisch endlose fadenförmige Gebilde, die aus endlichen Fasern (=Gespinst) oder aus mehreren praktisch endlosen Elementarfäden bestehen können. Bei Zwirnen handelt es sich um spezielle Formen von Garnen mit zwei oder mehr gezwirnten Einzelgarnen.

Erfindungsgemäß ist vorgesehen, dass das Gewebe selbst eine dreidimensionale Struktur aufweist, mit welcher sich das Gewebe teilweise in den Beton des Betonkörpers hinein erstreckt, sodass Fäden des Gewebes im Beton des Betonkörpers eingebettet sind.

Die dreidimensionale Struktur wird durch einen schlingen- oder bogenförmigen Verlauf zumindest eines Teils der Kettfäden oder der Schussfäden des Gewebes ausgebildet, wobei die Kettfäden bzw. Schussfäden im Bereich solcher Schlingen oder Bögen von einer Mittelebene des Gewebes frei abstehend verlaufen. Die die Schlingen oder Bögen ausbildenden Kettfäden oder Schussfäden können hierbei im Bereich dieser Schlingen oder Bögen flottierend verlaufen. Eine Flottierung bezeichnet eine Fadenstrecke, die als Kettfaden ohne Bindung über einer Anzahl von Schüssen liegt oder umgekehrt.

Zur Ausbildung eines solchen schlingen- oder bogenförmigen Verlaufs zumindest eines Teils der Kettfäden besteht ein anderer Teil der Kettfäden, z.B. jeder zweite, aus einem elastisch dehnbaren Material, beispielsweise aus Elastan, wobei die elastisch dehnbaren Fäden beim Weben vorgespannt werden. Zur Ausbildung eines schlingen- oder bogenförmigen Verlaufs zumindest eines Teils der Schussfäden besteht ein anderer Teil der Schussfäden, z.B. jeder zweite, aus einem elastisch dehnbaren Material, beispielsweise Elastan, wobei die aus einem elastisch dehnbaren Material bestehenden Schussfäden beim Weben vorgespannt werden.

Eine mögliche Weiterbildung der Erfindung sieht vor, dass mindestens ein Garn des Gewebes Schlingen oder Bögen aufweist. Diese bilden von einer Hauptebene des Gewebes frei abstehende Schlingen oder Bögen, von denen mindestens ein Teil zumindest über einen Teil ihrer jeweiligen Erstreckung in den Beton des Betonkörpers eingebettet ist. Garne, die solche Schlingen oder Bögen aufweisen, werden auch als Effektgarne bezeichnet und sind beispielsweise unter den Begriffen Schlingengarn oder Schleifengarn bekannt. Ein solches Garn mit Schlingen oder Bögen kann auch durch unter Zwirnung von mehr als einem Einfachgarn ausgebildet sein und wird dann auch als Effektzwirn bezeichnet.

Zumindest ein Teil der Schussfäden oder alle Schussfäden und/oder zumindest ein Teil der Kettfäden oder alle Kettfäden können von einem solchen Schlingen oder Bögen aufweisenden Garn gebildet werden.

Weitere Vorteile und Einzelheiten der Erfindung werden im Folgenden anhand der beiliegenden Zeichnung erläutert. In dieser zeigen:
Fig. 1 eine schematische Darstellung einer Bahnschwelle gemäß der Erfindung;
Fig. 2 eine schematische dreidimensionale Darstellung eines Abschnitts einer Verbindungslage gemäß einer Ausführungsform, die Hintergrund zur Erfindung bildet;
Fig. 3 eine Seitenansicht der Verbindungslage von Fig. 2, Blickrichtung A;
Fig. 4 eine Seitenansicht der Verbindungslage von Fig. 2 aus einer um 90° gedrehten Blickrichtung B;
Fig. 5, 6 und 7 Darstellungen analog den Fig. 2, 3 und 4 eines Abschnitts einer Verbindungslage gemäß einer erfindungsgemäßen Ausführungsform.

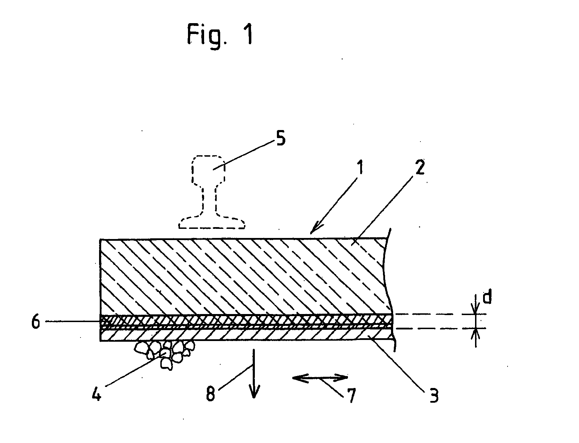

Fig. 1 zeigt in schematischer Darstellung eine Bahnschwelle 1 in Form einer Betonschwelle, die einen Betonkörper 2 und einen an dessen Unterseite angebrachte Schwellensohle 3 umfasst. Mit der Schwellensohle 3 liegt die Bahnschwelle 1 auf einem in Fig. 1 angedeuteten Schotterbett 4 auf.

Die mit Abstand zueinander im Schotterbett verlegten Bahnschwellen 1 tragen ein Gleis, von dem in Fig. 1 eine Schiene 5 in strichlierten Linien angedeutet ist. Die Befestigung der Schiene 5 an der Bahnschwelle 1 ist hierbei nicht dargestellt. Zwischen der Schiene 5 und der Bahnschwelle 1 kann eine Lage aus einem elastischen Material angeordnet sein.

Der Betonkörper 2 ist aus Stahlbeton ausgebildet. Es kann sich hierbei um einen "Spätentschaler", bei dem das Entschalen erfolgt, wenn der Beton ausgehärtet ist, oder um einen "Frühentschaler", welcher bereits vor dem Aushärten des Betons entschalt werden kann, handeln. Beispielsweise kann der Betonkörper 2 als Spannbeton ausgeführt sein.

Die Schwellensohle 3 besteht aus einem elastischen Kunststoff. Bevorzugt ist eine Ausbildung aus geschäumtem Polyurethan. Ausbildungen aus anderen, insbesondere geschäumten, Elastomeren oder thermoplastischen Elastomeren sind denkbar und möglich.

Die Schwellensohle 3 bedeckt vorzugsweise nur die Unterseite des Betonkörpers 2.

Die Verbindung der Schwellensohle 3 mit dem Betonkörper 2 erfolgt über eine Verbindungslage 6. Die Verbindungslage 6 ist hierbei in den Beton des Betonkörpers 2 über einen Teil ihrer Dicke d eingebettet. Über einen anderen Teil ihrer Dicke d ist die Verbindungslage 6 in das Material der Schwellensohle 3 eingebettet.

In Fig. 1 ist angedeutet, dass die Einbettungen der Verbindungslage 6 in den Betonkörper 2 und in die Schwellensohle 3 insgesamt die Gesamtdicke d der Verbindungslage 6 betragen. Es besteht also in einem Bereich, der innerhalb der Ausdehnung der Verbindungslage 6 liegt, eine Grenzfläche zwischen Beton des Betonkörpers 2 und Material der Schwellensohle 3.

Stattdessen könnte es auch möglich sein, dass zwischen dem Betonkörper 2 und der Schwellensohle 3 eine Schicht der Verbindungslage 6 verbleibt, welche weder in den Betonkörper 2 noch in die Schwellensohle 3 eingebettet ist. Diese würde dann zwischen dem Material des Betonkörpers 2 und dem Material der Schwellensohle 3 liegen und das Material des Betonkörpers 2 und das Material der Schwellensohle 3 würden nicht direkt aneinander angrenzen (keine gegenseitige Grenzfläche bilden).

Die Einbettung der Verbindungslage 6 in den Betonkörper 2 erfolgt bei der Herstellung des Betonkörpers 2, bevor der Beton des Betonkörpers 2 ausgehärtet ist. Beim Aushärten des Betons erfolgt die kraftschlüssige Verbindung mit dem Betonkörper 2. Es kommt hierbei zu Formschlüssen zwischen der Verbindungslage 6 und dem Betonkörper 2 in Bezug auf die Querrichtung 7 der Bahnschwelle 1. Vorzugsweise besitzt die Verbindungslage 6 zudem Hinterschneidungsflächen, hinter welche der Beton des Betonkörpers 2 bei der Einbettung der Verbindungslage 6 in den Betonkörper 2 eindringt, wodurch Formschlüsse in die rechtwinkelig zur Unterseite des Betonkörpers 2 bzw. rechtwinkelig zur Querrichtung 7 liegende Ausreißrichtung (=Auszugsrichtung) 8 ausgebildet werden.

Wenn nach dem Gießen des Betonkörpers 2, bevor dieser ausgehärtet ist, die Verbindungslage 6 in den Betonkörper 2 eingebettet wird, ist diese vorzugsweise bereits mit der Schwellensohle 3 verbunden. Die Schwellensohle 3 mit der an ihr festgelegten Verbindungslage 6, die in Richtung zum Beton des Betonkörpers 2 weist, wird in die Gießform auf den gegossenen Betonkörper 2 aufgelegt und vorzugsweise in den Beton des Betonkörpers 2 eingerüttelt. Stattdessen könnte die Schwellensohle 3 mit der in den Formhohlraum gerichteten Verbindungslage 6 auch bereits vor dem Gießen der Schwelle in den Formhohlraum eingelegt oder an diesen angelegt werden, sodass der Formhohlraum von der Schwellensohle mit der an ihr angebrachten Verbindungslage 6 begrenzt wird, worauf der Beton eingegossen wird.

Das Einbetten der Verbindungslage 6 in das Material der Schwellensohle 3 erfolgt, bevor der Kunststoff der Schwellensohle 3 ausgehärtet ist. Die Verbindungslage 6 wird hierzu entsprechend weit in das Reaktionsgemisch eingedrückt, welches nach der Aushärtung die Schwellensohle 3 bildet.

Anstelle einer Einbettung der Verbindungslage 6 in das Material der Schwellensohle 3 könnte die Verbindungslage 6 auch an die Oberfläche der Schwellensohle 3 stoffschlüssig, z.B. durch Verklebung und/oder thermische Verschweißung angebunden sein. Eine solche stoffschlüssige Verbindung kann erfolgen, nachdem das Material der Schwellensohle 3 bereits ausgehärtet ist. Auch kann eine stoffschlüssige Verbindung dadurch erreicht werden, dass die Verbindungslage 6 vor dem Aushärten des Materials der Schwellensohle 3 an deren Oberfläche angelegt wird, wobei beim Aushärten des Materials der Schwellensohle 3 die stoffschlüssige Verbindung zustande kommt. Im Fall der stoffschlüssigen Verbindung mit der Oberfläche der Schwellensohle 3 kann, falls gewünscht, die Verbindungslage 6 über ihre gesamte Dicke d in das Material des Betonkörpers 2 eingebettet werden, sodass sie abgesehen von ihren Oberflächenabschnitten, an denen sie stoffschlüssig mit der Schwellensohle 3 verbunden ist, vollständig in das Material des Betonkörpers 2 eingebettet ist, also abgesehen von diesen Oberflächen vollständig vom Material des Betonkörpers 2 umgeben ist.

Grundsätzlich denkbar und möglich, aber weniger bevorzugt wäre es auch, die Verbindungslage 6 zunächst in das Material des Betonkörpers 2 einzubinden und erst danach die Verbindung mit der Schwellensohle 3 auszubilden.

Der Verbund zwischen dem Betonkörper 2 und der Schwellensohle 3 erfolgt vorteilhafterweise bereits werkseitig, sodass auf der Baustelle diesbezüglich keine Arbeiten erforderlich sind.

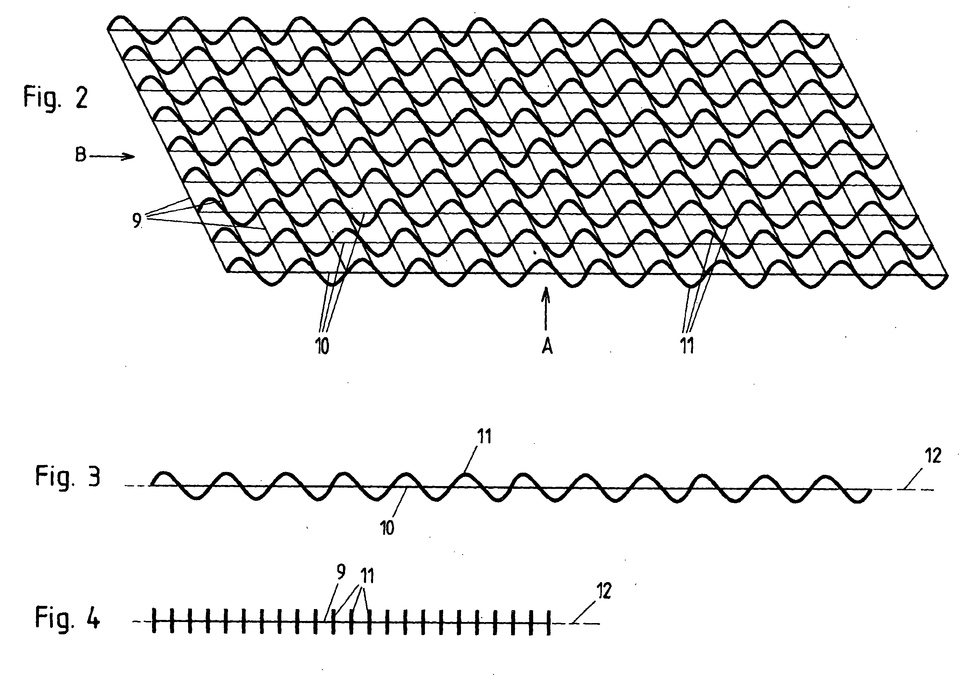

In einer erfindungsgemäßen Ausführungsform der Verbindungslage 6 wird die Verbindungslage 6 von einem Gewebe gebildet, das eine dreidimensionale Struktur aufweist. Eine Hintergrund zur Erfindung bildende Ausführungsvariante ist in den Fig. 2 bis 4 schematisch dargestellt. Die dreidimensionale Struktur des Gewebes wird hier dadurch ausgebildet, dass das Gewebe zusätzlich zu den schematisch dargestellten Kettfäden 9 und Schussfäden 10 Polfäden 11 aufweist.

Die Kett- und Schussfäden 9, 10 allein würden eine im Wesentlichen zweidimensionale Struktur ausbilden, welche in einer Hauptebene (=Mittelebene) 12 liegt. Durch das Mitweben der Polfäden 11 wird diese zweidimensionale Struktur in die dritte Dimension erweitert, wie dies bei verschiedenen Arten von Geweben mit Polfäden bekannt ist.

Das zusätzliche Polfadensystem kann in die Schussrichtung verlaufen, wie dies in den Fig. 2 bis 4 schematisch angedeutet ist, und wird dann auch als Polschussfadensystem bezeichnet. Das zusätzliche Polfadensystem könnte auch in die Kettrichtung verlaufen und wird dann auch als Polkettfadensystem bezeichnet.

In den Fig. 2 bis 4 ist schematisch ein annähernd sinusförmiger Verlauf der Polfäden 11 dargestellt. Die Polfäden bilden somit von der Hauptebene 12 bzw. Mittelebene wechselweise in beide Richtungen abstehende Bögen. Über zumindest Abschnitte dieser Bögen verlaufen die Polfäden 11 frei, d.h. liegen nicht an den Kett- und Schussfäden 9, 10 an sondern sind von diesen in Richtung rechtwinkelig zur Hauptebene 12 beabstandet. Durch die Einbettung von solchen Bögen in den Betonkörper 2 werden somit Hinterschneidungsflächen gebildet, die formschlüssig gegen ein Ausreißen der Verbindungslage 6 in die Ausreißrichtung 8 wirken. Die für ein Ausreißen der Schwellensohle 3 erforderliche Ausreißkraft wird dadurch erhöht.

Die auf der anderen Seite über die Hauptebene 12 abstehenden Bögen der Polfäden 11 können in das Material der Schwellensohle 3 eingebettet werden.

Die von der Hauptebene 12 abstehenden Abschnitte der Polfäden 11 könnten auch stärkere Biegungen als in Fig. 2 und 3 dargestellt aufweisen. So könnten sie über 180° oder mehr gebogen sein, womit sie rechtwinkelig zur Hauptebene 12 liegende Abschnitte oder Tangenten aufweisen würden. Bei solchen stärkeren Biegungen könnten die von der Hauptebene 12 abstehenden Abschnitte als Schleifen oder Schlingen (=Schlaufen) bezeichnet werden.

In der schematischen Darstellung von Fig. 2 sind die in Schussrichtung verlaufenden Polfäden an alle aufeinanderfolgenden Kettfäden 9 angebunden. Die abstehenden Abschnitte der Polfäden 11 könnten auch über zwei oder mehr Kettfäden 9 ohne Anbindung an diese Kettfäden 9 verlaufen, also flottierend ausgebildet sein. Eine solche flottierende Ausbildung ist in analoger Weise auch bei einem Verlauf der Polfäden 11 in die Kettrichtung möglich.

Ein Aufschneiden der abstehenden Abschnitte der Polfäden 11 unter Ausbildung eines Flors mit offenen Fadenenden ist möglich, aber weniger bevorzugt.

Bei einer Ansicht in die Längsrichtung, in welche die Polfäden 11 verlaufen (Fig. 4) stehen die abstehenden Abschnitte der Polfäden 11, welche Bögen oder (bei einem im Wesentlichen ringförmig geschlossenen Verlauf) Schlingen bilden, vorteilhafterweise im Wesentlichen rechtwinkelig von der Hauptebene 12 ab.

Bei dieser Ausführungsvariante wird die Verbindung zwischen der Schwellensohle 3 und dem Betonkörper 2 im Wesentlichen oder zumindest hauptsächlich durch die Polfäden 11 bewirkt. Das von den Kett- und Schussfäden 9, 10 ausgebildete Trägergewebe wird für die Ausbildung der dreidimensionalen Struktur der Polfäden 11 benötigt.

Der Verlauf der Polfäden 11 und ihre Abstände können definiert hergestellt werden, wodurch eine sehr homogene Struktur erreicht werden kann.

Beim Verbinden (=Kaschieren) der Verbindungslage 6 mit dem Reaktionsgemisch der Schwellensohle 3 wird das von den Kett- und Schussfäden gebildete Trägergewebe 9, 10 auf die Oberfläche des Reaktionsgemischs ausgerichtet, wobei die zum Reaktionsgemisch gerichteten abstehenden Abschnitte der Polfäden 11 in das Reaktionsgemisch eingedrückt werden. Dieser Vorgang kann durch Kaschierwalzen ausgeführt werden. Falls keine in Richtung zum Reaktionsgemisch abstehende Abschnitte der Polfäden 11 vorhanden sind, kann es vorgesehen sein, die Verbindungslage 6 lediglich an das Reaktionsgemisch der Schwellensohle 3 anzudrücken, worauf es bei der Aushärtung des Reaktionsgemisches der Schwellensohle zu einem Stoffschluss kommt.

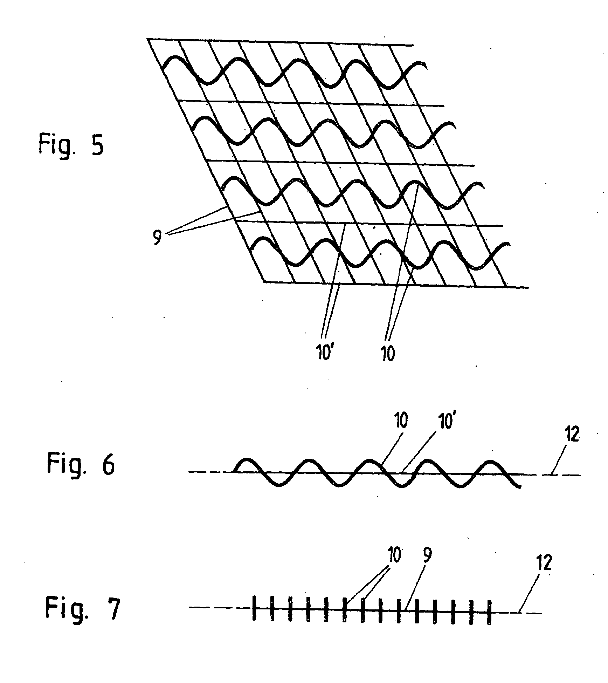

Eine erfindungsgemäße Ausführungsvariante zur Ausbildung einer dreidimensionalen Struktur des Gewebes ist schematisch in den Fig. 5 bis 7 dargestellt. Im Unterschied zur Ausbildungsform gemäß den Fig. 2 bis 4 ist hier kein separates Polfadensystem vorhanden.

In der in den Fig. 5 bis 7 dargestellten Ausbildung werden in der Schussrichtung mindestens zwei unterschiedliche Fadenarten für die Schussfäden 10, 10' verwendet, beispielsweise abwechselnd. Die Schussfäden 10' sind elastisch dehnbar, beispielsweise können sie aus Elasthan bestehen, und werden beim Weben gedehnt (=in die Schussrichtung auseinandergezogen). Nach dem Weben wird diese Vorspannung gelöst, worauf sich die Schussfäden 10' zusammenziehen und die restlichen Schussfäden 10 Bögen oder Schlingen aufwerfen. Über zumindest Abschnitte dieser Bögen oder Schlingen verlaufen die restlichen Schussfäden 10 frei, d.h. liegen nicht an den Kett- und Schussfäden 9, 10 an sondern sind von diesen in Richtung rechtwinkelig zur Hauptebene 12 beabstandet.

Die Schussfäden 10 können eine gegenüber den Schussfäden 10' geringere elastische Dehnbarkeit aufweisen, beispielsweise aus PES bestehen.

Die Ausrichtung der Bögen oder Schlingen kann gezielt gesteuert werden (nur nach oben, nur nach unten oder nach oben und nach unten). Die Größe und der Abstand der Bögen oder Schlingen lassen sich bei der Herstellung der Verbindungslage 6 gut definieren.

Bei einer Ansicht in die Längsrichtung, in welche die beim Weben gedehnten Schussfäden 10' verlaufen, stehen die von den restlichen Schussfäden 10 gebildeten Bögen oder Schlingen vorzugsweise im Wesentlichen rechtwinkelig von der Hauptebene 12 ab.

Die zuvor beschriebene Ausbildung kann auch in der Kettrichtung eingesetzt werden, d.h. in der Kettrichtung werden mindestens zwei unterschiedliche Fadenarten für die Kettfäden verwendet, beispielsweise abwechselnd. Zumindest eine Fadenart ist elastisch dehnbar und diese Fäden werden beim Weben gedehnt (=in die Kettrichtung auseinandergezogen). Nach dem Weben wird diese Vorspannung gelöst, worauf sich diese Kettfäden zusammenziehen und die restlichen Kettfäden Bögen oder Schlingen aufwerfen. Über zumindest Abschnitte dieser Bögen oder Schlingen verlaufen die restlichen Kettfäden frei, d.h. liegen nicht an den Schussfäden und den anderen Kettfäden an sondern sind von diesen in Richtung rechtwinkelig zur Hauptebene 12 beabstandet. Die restlichen Kettfäden können eine gegenüber den aus dem elastischen Material bestehenden Kettfäden geringere elastische Dehnbarkeit aufweisen.

Der Kaschiervorgang an die Schwellensohle 3 erfolgt analog wie zuvor beschrieben.

Eine zusätzliche Einbringung von getufteten Polfäden bei einer dreidimensionalen Ausbildung des Gewebes selbst ist denkbar und möglich.

Bei den zuvor beschriebenen Ausführungsformen für die Schussfäden 10 und/oder für die Schussfäden 10' und/oder für die Kettfäden 9 und/oder für die Polfäden 11 könnten auch Garne eingesetzt werden, welche abstehende Bögen oder Schlingen aufweisen, die von zumindest einem Filament des Garns gebildet werden.

Die Herstellung von solchen Garnen, die selbst abstehende Schlingen oder Bögen aufweisen, ist bekannt. Beispielsweise kann hierzu eine von zwei Garnkomponenten stark überdreht werden und die beiden Vorgarne durch einen Umwindeprozess zusammengeführt werden, wobei das Kreppgarn um das normal gedrehte Garn gebunden wird. Je nach Drehung des Kreppgarns entstehen dann die Schlingen.

Zusätzlich zu den in den Fig. schematisch dargestellten Kettfäden 9, Schussfäden 10, 10' und Polfäden 11 könnten auch weitere Kettfäden und/oder Schussfäden und/oder Polfäden 11 vorhanden sein. Derartige Gewebe bzw. getuftete Materialien sind grundsätzlich bekannt.

Für die beschriebenen Kettfäden 9 und/oder Schussfäden 10 und/oder Polfäden 11 können unterschiedliche Arten von Fäden, vorzugsweise Garnen, eingesetzt werden. Die Kettfäden und Schussfäden können sich, falls gewünscht, voneinander unterscheiden. Die Polfäden können sich, falls gewünscht, von den Kettfäden und/oder Schussfäden unterscheiden. Beispielsweise können die Kettfäden und/oder Schussfäden und/oder Polfäden aus Polyamid, Polyethylen, Polypropylen, PVC oder aus einem mit PVC umwundenen Faden oder einer Kombination der genannten Materialien bestehen, gegebenenfalls in Kombination mit weiteren Materialien.

Die Dicke der Schwellensohle liegt vorzugsweise im Bereich von 4mm bis 20mm.

Die in den Ausführungsbeispielen beschriebenen Bögen oder Schlingen, die von der Hauptebene 12 in Richtung zum Betonkörper 2 abstehen, erstrecken sich günstigerweise mindestens bis zu einem Abstand von 2mm, vorzugsweise mindestens 3mm, von der Hauptebene 12.

Die (rechtwinkelig zur Hauptebene 12 gemessene) Dicke der Verbindungslage 6 liegt vorzugsweise im Bereich von 2mm bis 30mm.

### Legende

### zu den Hinweisziffern:

- 1: Bahnschwelle
- 2: Betonkörper
- 3: Schwellensohle
- 4: Schotterbett
- 5: Schiene
- 6: Verbindungslage
- 7: Querrichtung
- 8: Ausreißrichtung
- 9: Kettfaden
- 10, 10': Schussfaden
- 11: Polfaden
- 12: Hauptebene

## Patentansprüche

1. Bahnschwelle, welche einen Betonkörper (2) mit einer an diesem angebrachten Schwellensohle (3) aufweist, wobei zur scherkraftfesten Verbindung der Schwellensohle (3) mit dem Betonkörper (2) eine Verbindungslage (6) vorgesehen ist, die einerseits mit der Schwellensohle (3) und andererseits mit dem Betonkörper (2) verbunden ist und hierbei teilweise in den Beton des Betonkörpers (2) eingebettet ist, wobei die Verbindungslage (6) von einem Gewebe gebildet wird oder ein Gewebe umfasst, **dadurch gekennzeichnet, dass** das Gewebe eine dreidimensionale Struktur aufweist, mit welcher sich das Gewebe teilweise in den Beton des Betonkörpers (2) hinein erstreckt, wobei das Gewebe von einer Hauptebene (12) zumindest einseitig in Richtung zum Betonkörper (2), vorzugsweise beidseitig, abstehende Bögen oder Schlingen aufweist und die dreidimensionale Struktur des Gewebes durch einen schlingen- oder bogenförmigen Verlauf zumindest eines Teils der Kettfäden (9) oder der Schussfäden (10, 10') des Gewebes ausgebildet wird und bei einem schlingen- oder bogenförmigen Verlauf zumindest eines Teils (10) der Schussfäden andere Schussfäden (10') ohne einen solchen schlingen- oder bogenförmigen Verlauf aus einem elastisch dehnbaren Material bestehen und bei einem schlingen- oder bogenförmigen Verlauf zumindest eines Teils der Kettfäden (9) andere Kettfäden (9) ohne einen solchen schlingen- oder bogenförmigen Verlauf aus einem elastisch dehnbaren Material bestehen.

2. Bahnschwelle nach Anspruch 1, **dadurch gekennzeichnet, dass** das Gewebe mit getufteten Polfäden (11) versehen ist.

3. Bahnschwelle nach Anspruch 2, **dadurch gekennzeichnet, dass** die getufteten Polfäden von einer Hauptebene (12) des Gewebes zumindest auf der dem Betonkörper (2) zugewandten Seite abstehende Schlingen oder Bögen bilden.

4. Bahnschwelle nach einem der Ansprüche 1 bis 3, **dadurch gekennzeichnet, dass** mindestens ein Garn des Gewebes Schlingen oder Bögen aufweist, von denen zumindest ein Teil von einer Hauptebene (12) des Gewebes absteht und von denen zumindest die auf der dem Betonkörper (2) zugewandten Seite des Gewebes abstehenden Schlingen oder Bögen zumindest teilweise in den Beton des Betonkörpers (2) eingebettet sind.

## Claims

1. A sleeper which has a concrete body (2) with a sleeper sole (3) attached thereto, wherein for shearing-force-proof connection of the sleeper sole (3) to the concrete body (2) there is provided a connecting layer (6) which is connected at one side to the sleeper sole (3) and at the other side to the concrete body (2) and is hereby partially embedded in the concrete of the concrete body (2), wherein the connecting layer (6) is formed from or comprises a woven fabric, **characterized in that** the woven fabric has a three-dimensional structure with which the woven fabric partially extends into the concrete of the concrete body (2), wherein the woven fabric has curved portions or loops projecting from a main plane (12) at least at one side in the direction of the concrete body (2), preferably at both sides, and the three-dimensional structure of the woven fabric is formed by a loop-shaped or curved course of at least some of the warp threads (9) or weft threads (10, 10') of the woven fabric and in the case of a loop-shaped or curved course of at least some (10) of the weft threads other weft threads (10') without such a loop-shaped or curved course consist of an elastically extendable material and in the case of a loop-shaped or curved course of at least some of the warp threads (9) other warp threads (9) without such a loop-shaped or curved course consist of an elastically extendable material.

2. A sleeper according to claim 1, **characterized in that** the woven fabric is provided with tufted pile threads (11).

3. A sleeper according to claim 2, **characterized in that** the tufted pile threads form loops or curved portions projecting from a main plane (12) of the woven fabric on at least the side facing the concrete body (2).

4. A sleeper according to any one of claims 1 to 3, **characterized in that** at least one yarn of the woven fabric has loops or curved portions, of which at least some thereof project from a main plane (12) of the woven fabric and of which at least the loops or curved portions projecting on the woven-fabric side facing the concrete body (2) are at least partially embedded in the concrete of the concrete body (2).

## Revendications

1. Traverse de chemin de fer comprenant un corps en béton (2) sur lequel est montée une semelle de traverse (3), une couche de liaison (6) étant reliée d'une part à la semelle de traverse (3) et d'autre part au corps en béton (2), et en partie insérées dans le béton du corps en béton (2), pour obtenir une liaison résistante aux cisaillements entre la semelle de traverse (3) et le corps en béton (2), la couche de liaison (6) consistant en un tissu ou comprenant un tissu, **caractérisée en ce que** le tissu présente une structure tridimensionnelle avec laquelle le tissu s'insère en partie dans le béton du corps en béton (2), le tissu présentant des arcs ou des bouches en saillie sur au moins une côté, de préférence sur les deux côtés, d'un plan principal (12) en direction du corps en béton (2) et la structure tridimensionnelle du tissu étant constituée par la forme en arc ou en boucle d'au moins une partie des fils de chaîne (9) ou des fils de trame (10, 10') du tissu, et lorsqu'au moins une partie (10) des fils de trame sont en forme de boucle ou d'arc, d'autres fils de trame (10'), n'ayant pas une telle forme de boucle ou d'arc, étant constitués d'un matériau élastique extensible et, lorsqu'au moins une partie des fils de chaîne (9) sont en forme de boucle ou d'arc, d'autres fils de chaîne (9), n'ayant pas une telle forme de boucle ou d'arc, sont constitués d'un matériau élastique extensible.

2. Traverse de chemin de fer selon la revendication 1, **caractérisée en ce que** le tissu est doté de fils de poil (11) tuftés.

3. Traverse de chemin de fer selon la revendication 2, **caractérisée en ce que** les fils de poil tuftés d'un plan principal (12) du tissu forment des boucles ou des arcs en saillie au moins sur le côté dirigé vers le corps en béton (2).

4. Traverse de chemin de fer selon l'une quelconque des revendications 1 à 3, **caractérisée en ce qu'**un fil du tissu présente des boucles ou des arcs dont au moins une partie est en saillie sur un plan principal (12) du tissu et dont au moins les boucles ou ars en saillie sur le côté du tissu dirigé vers le corps en béton (2) sont insérés, du moins en partie, dans le corps en béton (2).
